# EUROPEAN PATENT SPECIFICATION

(11) **EP 4 182 090 B1**
(45) Date of publication and mention of the grant of the patent: **03.06.2026**
(21) Application number: 21743485.1
(22) Date of filing: 13.07.2021
(51) Int. Cl.: B05B 12/12, B08B 9/027, B05B 1/18, B05B 12/14, B05B 15/555, B05B 15/55, E03C 1/046, B05B 12/02, B05B 12/00, E03C 1/04

(54) **DISPENSING SYSTEM AND A METHOD FOR ITS OPERATION, CLEANING UNIT AND DISPENSING UNIT**
ABGABESYSTEM UND VERFAHREN ZU DESSEN BETRIEB, REINIGUNGSEINHEIT UND ABGABEEINHEIT
SYSTÈME DE DISTRIBUTION ET SON PROCÉDÉ DE FONCTIONNEMENT, UNITÉ DE NETTOYAGE ET UNITÉ DE DISTRIBUTION

(30) Priority: 14.07.2020 CH 8642020
(43) Date of publication of application: 24.05.2023
(73) Proprietor: L'OREAL, 75008 Paris (FR)
(72) Inventor: MOCK, Elmar, 1922 Salvan (CH); MARETTE, Alexis, 2502 Biel/Bienne (CH)
(74) Representative: Frei Patent Attorneys
(86) International application number: PCT/EP2021/069521
(87) International publication number: WO 2022/013251

(56) References cited:
- WO-A1-2018/122206
- US-A1- 2010 126 541
- US-A1- 2018 071 763
- US-B1- 9 079 204

## Description

The invention relates to the field of sanitary installations. It relates to a dispensing system and a method for its operation, and a cleaning unit and a connection unit, as described in the preamble of the corresponding independent claims.

WO 2020/070159 A1 discloses a showerhead with one or more cartridges, each creating a spray of water by means of colliding water jets.

Typical issues arising in this context are fouling on the inside walls of the hose, and the accumulation of limescale inside the dispensing head and also on its outside, around the dispensing head's nozzles. Fouling typically is caused by the growth of a biofilm, that is, by bacterial growth. Fouling and limescale shall be referred to collectively as deposits.

JP2002102843 discloses a bathtub water passage sterilising/cleaning system with a steam generator, and an arrangement of valves for guiding steam through water supply conduits between a water tank and a bath water use terminal, in order to sterilize these conduits. When this is done, the steam is guided to a steam catching means instead of the bath water use terminal. In an embodiment, a pulsating steam, with fluctuating pressure and or debit and or temperature, is created in order to enhance the cleaning effect. According to other embodiments, a heat recovery means is provided, an arrangement of valves is provided to reverse the flow of steam in the conduit, an additional supply of cold water is provided in order to cool the conduit and valves in order to prevent damage by the hot stem, a heat pump unit is provided in order to recover exhaust heat from the bath water, or a fuel cell system is provided to generate heat for creating the steam.

WO2018122206 discloses a system to be used by hairdresser, including a showerhead that can be supplied with water mixed with treatment and washing additives, and a wash basin in which a treated person's hair is placed.

US2010126541 discloses a cleaning device for cleaning spray guns, particularly paint spray guns. The device has separate chambers for manually cleaning and drying a spray gun, and for storing fresh cleaning fluid and collecting used cleaning fluid. US9079204 discloses a showerhead cleaning adapter connected to an inlet pipe to a showerhead. It can be manually operated to discharging cleaning solution into the showerhead.

US2018071763 discloses a container that can be suspended from a showerhead, allowing the showerhead to soak in cleaning solution.

It is an object of the invention to create a dispensing system and a method for its operation, which provide an improvement over the prior art.

A further possible object of the invention is to create a dispensing system and a method for its operation, for creating a mixture of a liquid, in particular water, with an additive.

One or more of these objects are achieved by a dispensing system according to claim 1 and a method for its operation according to claim 8.

The dispensing system can be a shower in a bathroom or combined with a sink, and is for use to wash or shower the human body, and/or for cosmetic or hair care applications, for example for use by professional hairdressers.

In other applications, the dispensing system and corresponding methods are implemented in combination with devices for medical applications in which fluids are delivered for use on humans or animals, through conduits that are prone to deposits forming, and/or in which further devices need to be regularly sterilised. This is particularly the case for devices that do not fit in an autoclave, such as tracheoscopic or similar devices.

The subject matter of the invention will be explained in more detail in the following text with reference to exemplary embodiments which are illustrated in the attached drawings, in which:
- Figure 1: schematically shows a dispensing system , that is not according to the claims, with a dispensing unit and a cleaning unit in a separated state;
- Figure 2: the same, in a state combined for cleaning the dispensing unit;
- Figure 3: details of a connection unit of the dispensing unit and a cleaning attachment unit of the cleaning unit;
- Figure 4-5: details of another connection unit and another cleaning attachment unit;
- Figure 6: a detail of a receptacle unit; and
- Figure 7: an integrated configuration of the dispensing unit and cleaning unit according to the claims.

In principle, identical or functionally identical parts are provided with the same reference symbols in the figures.

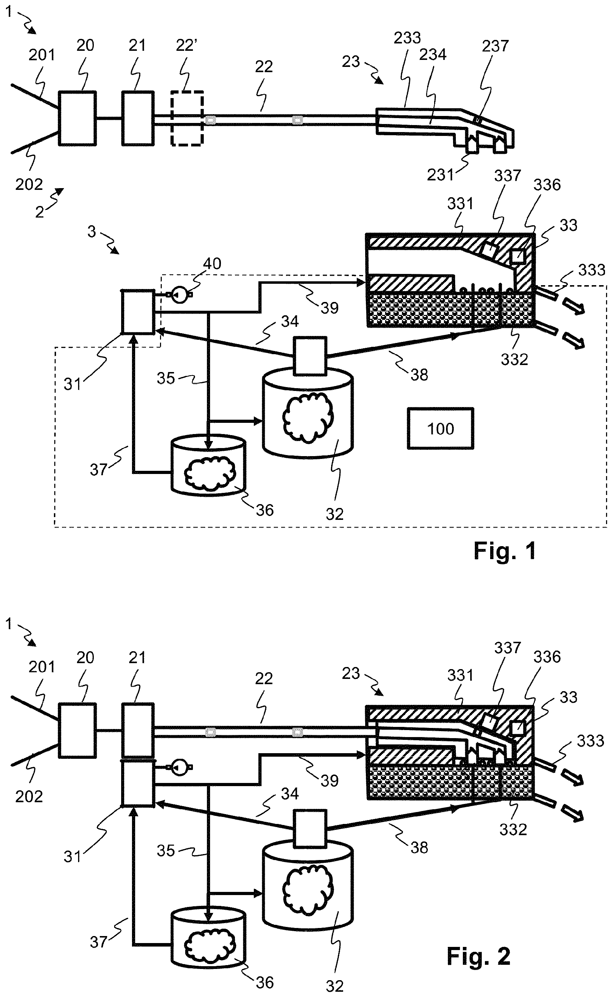

**Figure 1** shows a dispensing system 1, that does not fall within the scope of the claims, with a dispensing unit 2 and a cleaning unit 3 in a separated state, and **Figure 2** shows them in a combined state, for cleaning the dispensing unit 2.

The dispensing system 1 comprises commonly present elements of, for example, a shower in a bathroom, for use to wash or shower the human body, or for cosmetic or hair care applications, or for medical treatment. Such elements are a cold water supply 201 and hot water supply 202 feeding into a water mixer 20. The water mixer 20 serves to control a water flow and temperature and can comprise manually operated valves or a manually operated mixing cartridge, usually a ceramic cartridge. A hose 22, or more generally, a conduit, is arranged to guide the water from the water mixer 20 to a dispensing head 23. Optionally, further devices 22' can be part of the dispensing unit 2, such as units for filtering and/or heating and/or for admixing further additives, such as soap, colorants, detergents, cosmetic or body treatment products etc. The cleaning unit 3 serves to clean the dispensing head 23, hose 22 and, if they are present, the further device or devices 22'.

The dispensing head 23 can be a standard dispensing head, or comprise an outer shell 233 holding an inner conduit 234 guiding the water to outlet cartridges 231 for spraying the water. The dispensing head 23 can be a showerhead as disclosed in the initially mentioned WO 20201070159 A1.

In addition to commonly known elements, the dispensing unit 2 comprises a connection unit 21 which is connected on an intake side to the outlet of the water mixer 20, and at an outlet side to the hose 22. In normal operation of the dispensing unit 2, the connection unit 21 passes the water from the intake side to the outlet side. A user can control the water flow and temperature by means of the water mixer 20. Thus, the only change to an existing installation can be the addition of the connection unit 21. In embodiments, the water mixer 20 and connection unit 21 are a single, integrated unit. This integrated unit can be installed in place of a conventional water mixer 20. It can be integrated in a wall or attached to a wall, or integrated in a device for body or hair treatment. Such a device in turn can be integrated in a hairdresser's chair.

The cleaning unit 3 comprises a cleaning fluid delivery unit 32 with a cleaning fluid conduit 34 for delivering a cleaning fluid, or a component of a cleaning fluid, to a cleaning attachment unit 31. The cleaning fluid delivery unit 32 delivers a component of the cleaning fluid, which is steam, in which case the cleaning fluid delivery unit 32 is a steam generator. The cleaning attachment unit 31 and connection unit 21 are arranged for guiding the fluid from the cleaning fluid conduit 34 into the connection unit 21 and into the hose 22 and dispensing head 23. In embodiments, the cleaning attachment unit 31 is configured to add further fluids.

The connection unit 21 can be configured to switch between delivery of the cleaning fluid and water from the water mixer 20 to the hose 22, or to mix the cleaning fluid with water from the water mixer 20. For this, the connection unit 21 comprises mixing valves 212a, 212b or a mixing unit 211 powered from the cleaning attachment unit 31.

In other examples that do not fall within the scope of the claims, the mixing valves 212a, 212b or the mixing unit 211 are part of the cleaning attachment unit 31, and the water from the water mixer 20 is guided to the cleaning attachment unit 31 via the connection unit 21 when they are coupled to one another.

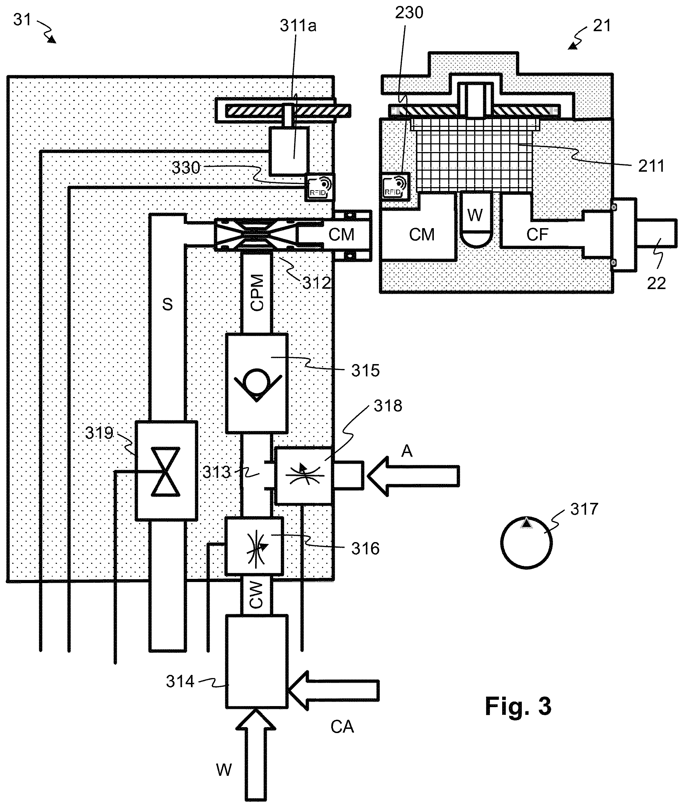

The cleaning attachment unit 31, in the embodiment shown in more detail in **Figure 3****,** is configured to provide the cleaning fluid to the connection unit 21. The cleaning fluid is provided in the cleaning attachment unit 31 as steam from the cleaning fluid delivery unit 32, as water, or as a mixture of such steam with further components, such as water, hot water, air and cleaning and/or foaming agents. Air can be provided through an air inlet pump 40, shown in **Figure 1** and **2****,** or through a valve, shown in **Figure 3****.**

In embodiments, the cleaning attachment unit 31 can add hot water delivered from a boiler 36 via a hot water conduit 37 to the cleaning fluid, or provide the entire flow of cleaning fluid by this hot water.

In embodiments, a water supply conduit 35 can be arranged to provide water from the cleaning attachment unit 31 to the cleaning fluid delivery unit 32 and/or the boiler 36. In this case, the cleaning attachment unit 31 is arranged to be supplied with water from the connection unit 21. If no water supply conduit 35 is present, then water containers in the cleaning fluid delivery unit 32 and/or boiler 36 can be filled manually.

The cleaning unit 3 comprises a receptacle unit 33 in which the dispensing head 23 can be placed for cleaning. A presence detector 336 detects whether the dispensing head 23 is present.

In embodiments, the receptacle unit 33 comprises a volume with a coolant storing element 331, surrounding the dispensing head 23. The coolant storing element 331 is an open pored material and can be filled with cooling water supplied by a cooling water conduit 39 from the cleaning attachment unit 31. Cooling the outside of the dispensing head 23 in this manner prevents it from being damaged by hot cleaning fluid. One or more outlets 333 can be present, for removal of the cooling fluid. Flow through the outlet can be controlled by an active valve, or by the valve being a relief valve, or by the height of the valve relative to the volume of the coolant storing element 331.

In embodiments, the receptacle unit 33 comprises a heat absorbing element 332 in a volume for collecting cleaning fluid exiting the dispensing head 23. The heat absorbing element 332 is an open pored material having a relatively high specific heat capacity, such as a metal or ceramic. One or more further outlets 333 can be present, for removal of cooled-down cleaning fluid and/or cooling fluid.

In other embodiments, the heat absorbing element 332 and/or the coolant storing element 331 are cooled not via the cooling water conduit 39 but by supplying cooling water through the hose 22, alternating with (hot) cleaning fluid. In a cooling phase, the cooling water for example cools both the heat absorbing element 332 and coolant storing element 331, with warmed up cooling water exiting through the outlet 333.

In embodiments, the heat absorbing element 332 comprises a filter structure based on hard or elastic or soft foam or open pored structure. The structure may be made of a shape memory alloy or a shape memory polymer, causing the structure to have smaller pores and thus to be more resistant to a fluid flowing through it if the network is exposed to hot steam, and larger pores, being less resistant when the network is exposed to water, being cooler than steam.

The receptacle unit 33 can be supplied with cleaning fluid by an additional cleaning fluid conduit 38. Here too, the cleaning fluid can be steam, or water, or a mixture of steam with air and/or water, and optionally a cleaning agent and/or a foaming agent. The cleaning fluid can be guided to and applied directly to regions around nozzle outlets of the dispensing head 23.

A vibration generator 337 is arranged to impart vibrations, preferably in the ultrasound range, for cleaning a dispensing head 23 arranged in the receptacle unit 33.

If the dispensing head 23 comprises an outer shell 233 and inner conduit 234, then it can comprise one or more vibration transmitters 237 for transmitting vibrations from the outer shell 233 to the inner conduit 234. The one or more vibration transmitters 237 are arranged to provide an efficient path, in particular a short path, from the vibration generator 337 to locations inside the inner conduit 234 where deposits are prone to accumulate. A vibration transmitter 237 can be a bridge, bar or link of material connecting the outer shell 233 and inner conduit 234.

A controller 100 of the cleaning unit 3 is arranged to read values of sensors, such as for temperature, flow and the presence detector 336, and to control the actuators such as valves and mixers to perform cleaning cycles, and to communicate with the connection unit 21. The cleaning unit 3 is configured to supply (hot) cleaning fluid, in particular comprising steam, to the dispensing head 23 only if it is arranged in the receptacle unit 33.

In embodiments, the cleaning unit 3 is configured to perform a reverse cleaning cycle in which cleaning fluid provided by the additional cleaning fluid conduit 38 flows through the dispensing head 23 and the hose 22 to the cleaning attachment unit 31 and through a further outlet conduit (not illustrated) out of the cleaning attachment unit 31. A valve controlling flow of water from the water mixer 20 into the connection unit 21 is closed, and an additional valve is arranged for guiding the reverse flow out of the cleaning attachment unit 31 through the further outlet conduit.

The cleaning unit 3 can be transported together to multiple places of use, for cleaning different dispensing units 2. The elements shown in **Figure 1** to be part of the cleaning unit 3, if they are present, can be arranged in a common housing, indicated by a dashed line. The housing typically forms a compact unit that can be carried or rolled to a place of use. The cleaning attachment unit 31 can be detachable from the housing, remaining connected to the other elements by the respective conduits, if present, so that the cleaning attachment unit 31 can be moved to and connected to the connection unit 21. The receptacle unit 33 can be integrated in the housing, but accessible from the outside, so that the dispensing head 23 can be placed in it. In other embodiments, the receptacle unit 33 is outside of the housing. In this case the receptacle unit 33 can be connected to the housing through one or more of the additional cleaning fluid conduit 38, cooling water conduit 39 and outlet 333.

**Figure 3** shows details of a connection unit 21 of the dispensing unit and a cleaning attachment unit 31 of the cleaning unit. They are shown in a position in which they can be engaged by moving them against one another in the horizontal direction. The connection unit 21 comprises a mixing unit 211, in this case a mixing cartridge with one degree of freedom, for controlling the relative amount of water W from the water mixer 20 and a cleaning mixture CM provided by the cleaning attachment unit 31. This is done via a cleaning mixture conduit of the cleaning attachment unit 31 being plugged into a cleaning mixture conduit of the connection unit 21 (or vice versa) when the two units are engaged. The output of the mixing unit 211 is the cleaning fluid CF provided to the conduit of hose 22. The relative amount is controlled by a rotation of the mixing unit 211, which is effected by a gear wheel meshing with a gear wheel of the cleaning attachment unit 31, which in turn is driven by a first drive motor 311a. This illustrates the principle of the force transmission, in other embodiments such a detachable coupling of the force transmission to the connection unit 21 is implemented by other mechanical interfaces.

In embodiments, not illustrated, the mixing unit 211 has a second degree of freedom in which the total amount of water and cleaning mixture can be controlled. Correspondingly, a second drive motor is arranged in the cleaning attachment unit 31 and is detachably coupled to the connection unit 21 for driving movement of the cartridge in a radial direction.

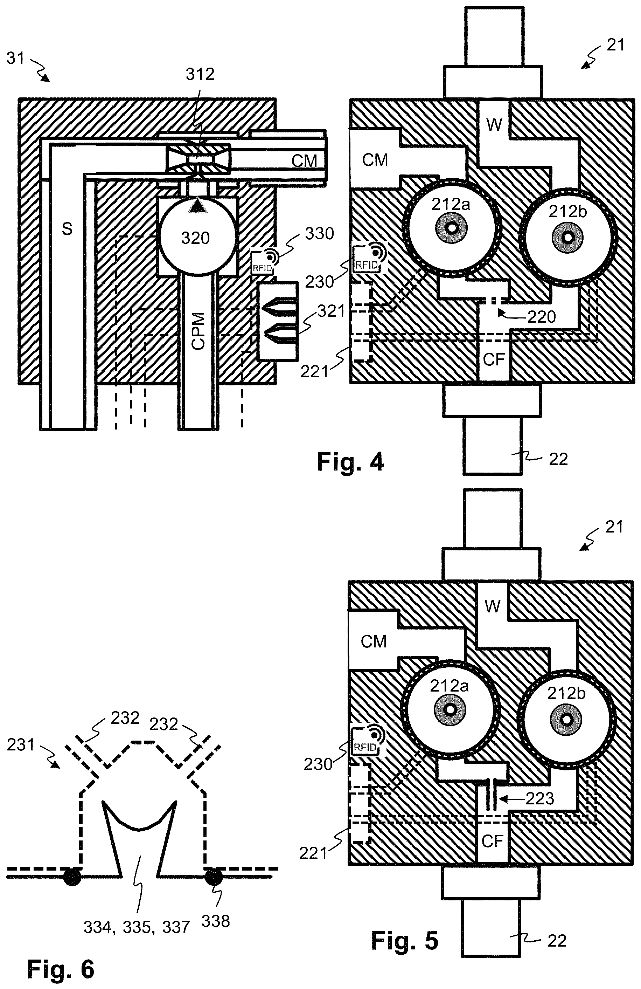

**Figure 4** shows mixing valves instead of the mixing unit 211. Their operation is electrically or mechanically controlled by the cleaning attachment unit 31 via a corresponding interface.

With reference again to **Figure 3****,** the connection unit 21 comprises a RFID tag 230 arranged to be read out by a RFID detector 330 of the cleaning attachment unit 31. This allows to identify the connection unit 21 and thus for data to be transmitted and stored in association with the connection unit 21. Such data can be cleaning data related to cleaning operations performed by the cleaning unit 3, or usage data collected by the dispensing unit 2 during its normal operation and transmitted from the connection unit 21 to the cleaning attachment unit 31. For the collection of such data, the connection unit 21 and cleaning attachment unit 31 comprise alternative or further means for wireless or optical communication (not illustrated). Communication can be bidirectional, and the connection unit 21 can be configured to receive data, such as operating parameters, from the cleaning attachment unit 31, to be used in normal operation of the dispensing unit 2. Such data can comprise cleaning data, generated by the cleaning unit 3 and stored in the dispensing unit 2. Such data can comprise at least a date at which the dispensing unit 2 was last cleaned.

In the cleaning attachment unit 31, the cleaning mixture CM is created by admixing a cleaning pre-mixture CPM to a flow of steam S by means of a venturi injector 312. The steam supply is controlled by a safety shutoff valve 319. The cleaning pre-mixture CPM is created in a mixing chamber 313. The mixing chamber 313 is separated from the venturi injector 312 by a check valve 315. The mixing chamber 313 is supplied with cleaning water CW supplied via a water control valve 316, and air A supplied via an air inlet valve 318 or an air inlet pump 40. The air inlet valve 318 can be an active, controlled valve or a passive, throttle valve. In the latter case, the air A is sucked in due to the pressure drop created in the venturi injector 312. Instead of the water control valve 316, a water pump 317 can be present, in particular a positive displacement pump. The cleaning water CW can be a mixture of water W and cleaning agent CA created in an additive mixer 314. Depending on the pressure condition under which the device operates, it may be the case that the pressure drop in the venturi injector 312 is not sufficient to suck in the cleaning pre-mixture CPM. In this case, a further pump or cleaning pre-mixture pump 320 (see **Figure 4****),** in particular a volumetric pump, such as a peristaltic pump, can be provided to deliver the cleaning pre-mixture to the venturi injector 312.

In embodiments, the cleaning pre-mixture pump 320 is arranged in the cleaning fluid delivery unit 32 instead of the cleaning attachment unit 31. In this case a check valve 315 can be arranged in the cleaning attachment unit 31, taking the place of the cleaning pre-mixture pump 320 shown in **Figure 4****.** The cleaning pre-mixture, typically comprising air A, cleaning agent CA and water W, thus is created in the cleaning fluid delivery unit 32, and from there is delivered by the cleaning pre-mixture pump 320 through the conduit 34 to the cleaning attachment unit 31.

In embodiments, a further pump is present after the venturi injector 312, for pumping the cleaning mixture CM.

**Figure 3** shows control lines for the different controlled valves, a power supply for the first drive motor 311a, and a communication line for the RFID detector 330. All of these typically are connected to the controller 100.

**Figure 4** shows details of further embodiments of the connection unit 21 and of the cleaning attachment unit 31. The cleaning attachment unit 31 shows only the venturi injector 312 and a cleaning pre-mixture pump 320. However, elements of the cleaning attachment unit 31 shown in **Figure 3** can be present, in addition to or instead of the pre-mixture pump 320.

The connection unit 21 comprises mixing valves, a first mixing valve 212a for the cleaning mixture CM, and a second mixing valve 212b for the water W. The mixing valves comprise an electrical valve drive each, allowing proportional control of the flow through the respective valve. The valve drives are powered and controlled by electrical lines that are connected through an electrical connector 221 of the connection unit 21 to an electrical connector 321 of the cleaning attachment unit 31. In other embodiments, not illustrated, the valve drives are located in the cleaning attachment unit 31, and the mixing valves 212a, 212b are driven through detachable mechanical drive couplings between the cleaning attachment unit 31 and connection unit 21.

In both the electrically and mechanically driven variants of the mixing valves, they preferably each comprise a biasing mechanism, such as a spring. The biasing mechanism is configured to move the first mixing valve 212a (for the cleaning mixture CM) to a closed position and the second mixing valve 212b (for the water W) to an open position when the connection unit 21 is disconnected from the cleaning attachment unit 31, or when the cleaning attachment unit 31 is not powered.

The cleaning mixture CM, which is based on steam, is injected into the water conduit through one or more injection openings 220. The resulting cleaning fluid CF is provided to the hose 22, or to further devices 22' if present.

In embodiments, the first mixing valve 212a is not an externally controlled valve, that is, an electrically or mechanically controlled valve. Rather it is replaced by a check valve. In this case, the delivery of the cleaning mixture CM to the flow of water W is controlled by an alternative first mixing valve arranged in the cleaning attachment unit 31 or in the cleaning fluid delivery unit 32. This simplifies the construction and control of the connection unit 21.

**Figure 5** shows a variation of the connection unit 21 in which the injection openings are realised in the shape of an injection conduit 223 extending into the water conduit. In this way cleaning mixture based on steam can be injected into the centre of the flow of water, providing a thorough mixing of steam and water.

The two mixing valves 212a, 212b can have different flow characteristics since one of them controls the flow of water and the other one - depending on the operating mode - controls the flow of steam.

The connection unit 21 and cleaning attachment unit 31 are designed to be coupled and decoupled without the need for tools. The elements related to the coupling, in particular the pluggable cleaning mixture (CM) conduits, the RFID tag 230 and RFID detector 330 or other near-field communication means, and the electrical or mechanical interfaces for driving the mixing unit 211 or mixing valves 212a, 212b are considered to be interface elements.

In embodiments in which elements of the connection unit 21 and cleaning attachment unit 31 are designed to be in a permanently connected arrangement, the interface elements are not present.

**Figure 6** shows a detail of the receptacle unit 33. The outline of an outlet cartridge 231 of the dispensing head 23 is shown with dashed lines. It shows two nozzles 232 for creating colliding jets of water for generating a spray in the normal use of the dispensing head 23 for showering or washing. Regions around the outlets of the nozzles 232 are prone to accumulation of limescale, which can impede optimal operation of the nozzles. The receptacle unit 33, in locations facing the inside of such outlet cartridges 231, can comprise elements for cleaning these regions. Such elements, not illustrated in detail, can be
- guiding elements 334 that guide the spray from the nozzles 232 to clean the regions around the nozzle outlets;
- cleaning elements 335 such as brushes, or nozzles spraying cleaning fluid supplied by the additional cleaning fluid conduit 38;
- vibration generators 337.

Gaskets 338 are arranged to keep cleaning fluid from the dispensing head 23 or the additional cleaning fluid conduit 38 from reaching and damaging the outer surface of the dispensing head 23.

In a minimal configuration, the cleaning attachment unit 31 is provided only with cleaning fluid, which is steam, from the cleaning fluid delivery unit 32. The receptacle unit 33 is provided with cooling water through the hose 22 and dispensing head 23, alternating with hot cleaning fluid.

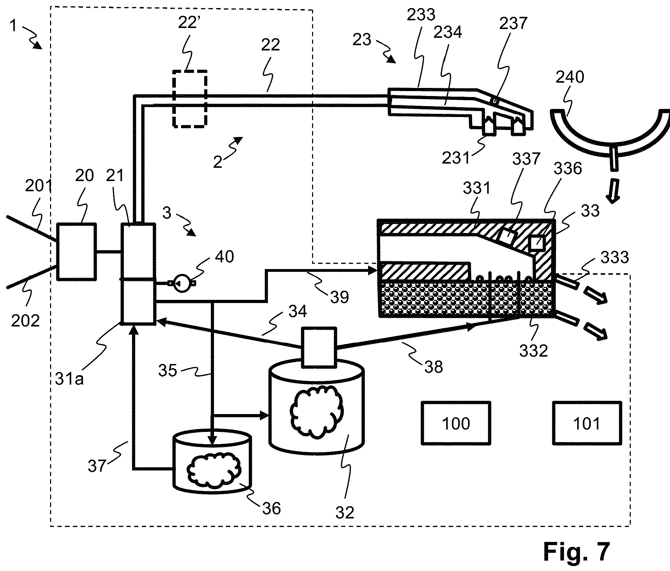

In an integrated configuration, the dispensing unit 2 and cleaning unit 3 are integrated units of the dispensing system 1. That is, the connection unit 21 and cleaning attachment unit 31 are not separate, but their functionality is implemented by a single, common unit. This unit can be also integrated with the water mixer 20. Interface elements for coupling the connection unit 21 to the cleaning attachment unit 31 are not required. The elements of the cleaning attachment unit 31 presented so far, without the interface elements, are considered to constitute a cleaning mixture preparation unit 31a. **Figure 7** shows a possible structure of such an integrated configuration. The elements enclosed in the dashed line, if they are present, are arranged in a common housing, typically a compact housing. The receptacle unit 33 can be integrated in the housing, but accessible from the outside, so that the dispensing head 23 can be placed in it. In other embodiments, the receptacle unit 33 is outside of the housing. In this case the receptacle unit 33 can be connected to the housing through one or more of the additional cleaning fluid conduit 38, cooling water conduit 39 and outlet 333. In other embodiments, the receptacle unit 33 is not present at all. The dispensing system 1 can comprise or be attached to a sink 240 with an outlet.

This configuration can be, for example, used for professional hairdressing applications. In this case, the further devices 22' can be configured for admixing hair care, colouring or cosmetic agents. Other applications are dental operatory packages, in which liquids are delivered for application to a patient, and conduits and hoses are prone to fouling.

Such an integrated configuration is particularly suited for controlling the temperature of the liquid being dispensed by admixing steam. In this way it is possible control the temperature with a high bandwidth and reliably to a set point temperature. This in turn simplifies use of the dispensing system 1. For example, in a hairdressing application, the controller 100 can control the temperature of water dispensed for hair treatment or rinsing without the user needing to manually regulate the temperature.

Such an integrated configuration is particularly suited for using the dispensing unit 2 to clean other objects that are part of or are used with of the dispensing system. Such objects can be the sink 240, and accessory devices, such as combs, brushes, etc. The cleaning can comprise applying steam to sterilise the objects. In an operating mode in which such cleaning of other objects takes place, the dispensing system 1 is configured to emit a warning signal.

In a setting for treatment of humans, such as in hairdressing or in a dental operatory package, the dispensing system 1 can be configured to detect the presence of a client in a treatment location, such as a seat associated with the dispensing system 1, and inhibit operation in a cleaning mode in which harmful temperatures or substances are present. This can be done with a presence detecting unit 101, for example installed in a seat. Such units are known from automobile applications, for detecting the presence of passengers.

Thanks to the warning signal and/or client presence detection the dispensing unit 2 and in particular the dispensing head 23 can be safely used on the one hand for applying fluids to a human client and on the other hand for cleaning the dispensing system 1 and other objects. In embodiments, a further safety function can ensure that the dispensing head 23 is only used if the operator is identified as being trained for using the system in such a cleaning mode. For example, this can be done with an RFID tag or by entering a code.

In a method for operating the dispensing system 1, maintenance operations are performed for maintaining the dispensing unit 2, in particular the hose 22, the dispensing head 23 and, if present, further devices 22'. Maintenance operations can be one or more of the following:
- Sterilising the dispensing unit 2. This can comprise providing steam to the dispensing unit 2.
- Decalcifying the dispensing unit 2. This can comprise providing a decalcifying agent to the dispensing unit 2 and then rinsing it with water. It can comprise alternatingly providing steam and cold water to the dispensing unit 2.
- Preventive treatment of the dispensing unit 2. This can comprise, in a final cycle of a maintenance operation, providing to the dispensing unit 2 a treatment agent for preventing or reducing future accumulation of deposits in the dispensing unit 2. The treatment agent can be a fluid that inhibits the accumulation of limescale and/or fouling, in particular by a biofilm. Since limescale forms a substrate for bacterial growth, inhibiting the growth of limescale indirectly inhibits bacterial growth. The treatment agent can be chosen to remain attached on inside surfaces of the dispensing unit 2. Such a fluid can comprise agents that mechanically or chemically inhibit growth of a biofilm. Such a fluid can itself comprise beneficial microorganisms that attach to the inside surfaces and inhibit the growth of undesired microorganisms. In embodiments, the fluid is an essential oil.

These maintenance operations can be performed repeatedly and alternating. For multiple sterilising and decalcifying operations can be performed alternating, followed by a final treatment operation. A maintenance program defining such a sequence of operations can be adapted according to the construction of the dispensing unit 2 to be cleaned and the environment in which the dispensing unit 2 is used. The environment can be defined by quality requirements, depending on the dispensing unit 2 being in as hotel, kitchen, private household, etc, and/ or by environmental factors such as the chalkiness of the water, ambient temperature.

Maintenance operations can be controlled by the controller 100 controlling operation of the various valves and motors of the dispensing system 1, in particular of the connection unit 21 and cleaning attachment unit 31.

The methods implementing maintenance operations are applicable to embodiments in which the dispensing unit 2 and cleaning unit 3 are separate and are connected before performing the methods, and also applicable to embodiments in which the dispensing unit 2 and cleaning unit 3 are integrated units of the dispensing system 1. In this case, elements that so far have been shown to be part of separate units such as the connection unit 21 and the cleaning attachment unit 31 can be in a common, integrated unit.

The controller 100 can, depending on a log of maintenance operations and on the current time or date, control which kind of maintenance operation is to be implemented. For example, sterilisation can be performed each day, whereas decalcification and/or preventive treatment can be performed at larger intervals, for example, weekly, or every tenth or twentieth time that the cleaning unit 3 is applied.

In a method for creating a mixture of a liquid, in particular water, with an additive, the additive is provided as a component of the cleaning mixture CM. The cleaning mixture CM thus comprises a flow of steam with the additive carried along with the steam, the additive being in a gaseous state. When the cleaning mixture condenses, either prior to or after being injected into the flow of water, the condensing mixture of steam and (vaporised) additive can create microscopic particles or droplets of additive encapsulated in the liquid. Due to the massive reduction of volume from the gaseous to the liquid state, for example, by a factor of one thousand, the droplets of additive are very small. Normally, a buoyant force, caused by a difference in specific weight, would cause the additive to separate from the water. However, with such very small droplet sizes, the buoyant force acting on the droplets is sufficiently counteracted by the surface tension of the water so as to inhibit the droplets to separate from the water. The microscopic droplets thus remain in the flow of water to which the steam is admixed, forming an emulsion. The emulsion thus is sufficiently stable and there is no need for emulsifying agents. This is especially the case if the emulsion is used immediately after having been created at the point of use - as opposed to storing it for later use. The emulsion is applied to a surface, for example, for cosmetic or medical or generally other purposes.

Suitable additives are, for example, essential oils, also known as volatile oils, ethereal oils, or aetherolea. Such oils contain volatile components, in particular components extracted by steam extraction.

In this way it is possible to very finely distribute an additive in the water, which in turn allows to use highly concentrated additives. This approach can be used for other applications in which the mixture that here is called cleaning mixture CM for the sake of consistency is used for purposes other than cleaning.

While the invention has been described in present embodiments, it is distinctly understood that the invention is not limited thereto, but may be otherwise variously embodied and practised within the scope of the claims.

## Claims

1. A **dispensing system (1)** for dispensing a fluid, the fluid being water or a water-based mixture, the system comprising a **dispensing unit (2)** and a **cleaning unit (3),** the dispensing unit (2) comprising
• a **connection unit (21)** for connecting the dispensing unit (2) to a supply of the fluid,
• a **dispensing head (23)** for dispensing the fluid;
• a conduit, in particular a **flexible hose (22),** for guiding the fluid from the connection unit (21) to the dispensing head (23);
• a **mixing unit (211) or mixing valves (212a, 212b)** for selecting from a flow of water from a water supply or from a flow of **cleaning mixture,** and/or for mixing the flow of water with the flow of cleaning mixture and for delivering the respective flow to the conduit, wherein the mixing unit (211) or mixing valves (212a, 212b) can be called first mixer, wherein the mixing unit (211) or mixing valves (212) are part of the connection unit (21);
wherein the cleaning unit (3) comprises
• a **cleaning mixture preparation unit (31a)** for providing the cleaning mixture (CM) to the connection unit (21);
• a **cleaning fluid delivery unit (32)** configured to deliver a cleaning fluid to the dispensing unit (2) via the cleaning mixture preparation unit (31a);
**characterised in that**
• the cleaning fluid delivery unit (32) is a steam generator, the cleaning fluid comprising steam;
• and the cleaning unit (3) comprises, for providing the **cleaning mixture** and as part of the cleaning mixture preparation unit (31a), a second mixer for admixing a **cleaning pre-mix,** to a flow of steam, thereby creating the cleaning mixture.

2. The dispensing system (1) of claim 1, wherein the cleaning unit (3) comprises a **receptacle unit (33)** configured to accommodate the dispensing head (23) and to receive fluids exiting the dispensing head (23).

3. The dispensing system (1) of claim 1 or claim 2, wherein the second mixer is a venturi injector (312).

4. The dispensing system (1) of claim 1 or 2 or 3, wherein the cleaning unit (3) comprises, for providing the **cleaning pre-mix** to the second mixer, a third mixer, in particular a mixing chamber (313), for admixing air, to a flow of cleaning water, thereby creating the cleaning pre-mix.

5. The dispensing system (1) of claim 4, wherein the cleaning unit (3) comprises, for providing the cleaning water to the third mixer, a fourth mixer, in particular an additive mixer (314), for admixing a cleaning agent to a flow of water, thereby creating the cleaning water.

6. The dispensing system (1) of one of claims 4 to 5, comprising one or more of the following:
• a control valve (316) or a water pump (317) arranged to provide the cleaning water to the mixing chamber (313);
• a water pump (317) arranged to provide the cleaning water to the mixing chamber (313), the water pump being a positive displacement pump, such as a peristaltic pump;
• a controlled valve (318) or a static valve arranged to provide air, in particular ambient air, to the mixing chamber (313).

7. The dispensing system (1) of one of the preceding claims, comprising a steam supply conduit for supplying steam to the second mixer, and further comprising a safety shutoff valve (319) arranged in the steam supply conduit, and/or wherein a check valve (315) is arranged in the flow of cleaning pre-mix to the second mixer or venturi injector (312), in particular after the third mixer or mixing chamber (313).

8. A method for operating the dispensing system (1) of one of the preceding claims, comprising delivering the cleaning fluid to the conduit or hose (22) and dispensing head (23) in the form of one or more of:
• steam;
• a mixture of steam, air and water.

## Patentansprüche

1. Ein Abgabesystem (1) zum Abgeben einer Flüssigkeit, wobei die Flüssigkeit Wasser oder eine Mischung auf Wasserbasis ist, wobei das System eine Abgabeeinheit (2) und eine Reinigungseinheit (3) aufweist, wobei die Abgabeeinheit (2) Folgendes aufweist:
• eine Anschlusseinheit (21) zum Anschließen der Abgabeeinheit (2) an eine Zufuhr der Flüssigkeit,
• einen Ausgabekopf (23) zum Ausgeben der Flüssigkeit;
• eine Leitung, insbesondere einen flexiblen Schlauch (22), zum Leiten der Flüssigkeit von der Anschlusseinheit (21) zum Ausgabekopf (23);
• eine Mischeinheit (211) oder Mischventile (212a, 212b) zum Auswählen zwischen einem Wasserstrom aus einer Wasserversorgung oder einem Strom der Reinigungsmischung und/oder zum Mischen des Wasserstroms mit dem Strom der Reinigungsmischung und zum Zuführen des jeweiligen Stroms zur Leitung, wobei die Mischeinheit (211) oder die Mischventile (212a, 212b) als erster Mischer bezeichnet werden können, wobei die Mischeinheit (211) oder die Mischventile (212) Teil der Anschlusseinheit (21) sind;
wobei die Reinigungseinheit (3) aufweist
• eine Reinigungsgemisch-Zubereitungseinheit (31a) zum Bereitstellen des Reinigungsgemischs (CM) für die Anschlusseinheit (21);
• eine Reinigungsflüssigkeitszufuhreinheit (32), die so konfiguriert ist, dass sie der Abgabeeinheit (2) über die Reinigungsgemisch-Zubereitungseinheit (31a) eine Reinigungsflüssigkeit zuführt;
**dadurch gekennzeichnet, dass**
• die Reinigungsflüssigkeitszufuhreinheit (32) ein Dampferzeuger ist, wobei die Reinigungsflüssigkeit Dampf aufweist;
• und die Reinigungseinheit (3) zur Bereitstellung der Reinigungsmischung und als Teil der Reinigungsmischungs-Zubereitungseinheit (31a) einen zweiten Mischer aufweist, um eine Reinigungsvormischung einem Dampfstrom beizumischen und dadurch die Reinigungsmischung zu erzeugen.

2. Das Abgabesystem (1) nach Anspruch 1, wobei die Reinigungseinheit (3) eine Aufnahmeeinheit (33) aufweist, die so konfiguriert ist, dass sie den Abgabekopf (23) aufnimmt und aus dem Abgabekopf (23) austretende Flüssigkeiten aufnimmt.

3. Das Abgabesystem (1) nach Anspruch 1 oder Anspruch 2, wobei der zweite Mischer ein Venturi-Injektor (312) ist.

4. Das Abgabesystem (1) nach Anspruch 1 oder 2 oder 3, wobei die Reinigungseinheit (3) einen dritten Mischer, insbesondere eine Mischkammer (313), aufweist, um einem Reinigungswasserstrom Luft beizumischen und dadurch die Reinigungsvormischung zu erzeugen.

5. Das Abgabesystem (1) nach Anspruch 4, wobei die Reinigungseinheit (3) zur Bereitstellung des Reinigungswassers für den dritten Mischer einen vierten Mischer, insbesondere einen Additivmischer (314), zum Einmischen eines Reinigungsmittels in einen Wasserstrom aufweist, wodurch das Reinigungswasser erzeugt wird.

6. Das Abgabesystem (1) nach einem der Ansprüche 4 bis 5, das eines oder mehrere der folgenden Elemente aufweist:
• ein Steuerventil (316) oder eine Wasserpumpe (317), die so angeordnet sind, dass sie das Reinigungswasser der Mischkammer (313) zuführen;
• eine Wasserpumpe (317), die so angeordnet ist, dass sie das Reinigungswasser der Mischkammer (313) zuführt, wobei die Wasserpumpe eine Verdrängerpumpe, wie beispielsweise eine Peristaltikpumpe, ist;
• ein gesteuertes Ventil (318) oder ein statisches Ventil, das so angeordnet ist, dass es Luft, insbesondere Umgebungsluft, der Mischkammer (313) zuführt.

7. Das Abgabesystem (1) nach einem der vorstehenden Ansprüche, das eine Dampfzufuhrleitung aufweist, um Dampf zum zweiten Mischer zu zuführen, und ferner ein in der Dampfzufuhrleitung angeordnetes Sicherheitsabsperrventil (319), und/oder wobei ein Rückschlagventil (315) im Strömungsweg der Reinigungsvormischung zum zweiten Mischer oder Venturi-Injektor (312) angeordnet ist, insbesondere nach dem dritten Mischer oder der Mischkammer (313).

8. Verfahren zum Betreiben des Abgabesystems (1) nach einem der vorstehenden Ansprüche, umfassend das Zuführen der Reinigungsflüssigkeit zur Leitung oder zum Schlauch (22) und zum Abgabekopf (23) in Form von einem oder mehreren der folgenden:
• Dampf;
• einem Gemisch aus Dampf, Luft und Wasser aufweist.

## Revendications

1. Système de distribution (1) destiné à distribuer un fluide, ledit fluide étant de l'eau ou un mélange à base d'eau, le système comprenant une unité de distribution (2) et une unité de nettoyage (3), l'unité de distribution (2) comprenant
• une unité de raccordement (21) destinée à raccorder l'unité de distribution (2) à une source d'alimentation en fluide,
• une tête de distribution (23) destinée à distribuer le fluide ;
• un conduit, en particulier un tuyau flexible (22), destiné à acheminer le fluide de l'unité de raccordement (21) vers la tête de distribution (23) ;
• une unité de mélange (211) ou des vannes de mélange (212a, 212b) pour sélectionner soit un flux d'eau provenant d'une alimentation en eau, soit un flux de mélange de nettoyage, et/ou pour mélanger le flux d'eau avec le flux de mélange de nettoyage et pour acheminer le flux correspondant vers le conduit, l'unité de mélange (211) ou les vannes de mélange (212a, 212b) peuvent être appelées premier mélangeur, l'unité de mélange (211) ou les vannes de mélange (212) faisant partie de l'unité de raccordement (21) ;
l'unité de nettoyage (3) comprenant
• une unité de préparation du mélange de nettoyage (31a) destinée à fournir le mélange de nettoyage (CM) à l'unité de raccordement (21) ;
• une unité de distribution de fluide de nettoyage (32) configurée pour distribuer un fluide de nettoyage à l'unité de distribution (2) via l'unité de préparation du mélange de nettoyage (31a) ;
**caractérisé en ce que**
• l'unité de distribution de fluide de nettoyage (32) est un générateur de vapeur, le fluide de nettoyage comprenant de la vapeur ;
• et l'unité de nettoyage (3) comprend, pour fournir le mélange de nettoyage et dans le cadre de l'unité de préparation du mélange de nettoyage (31a), un deuxième mélangeur destiné à mélanger un prémélange de nettoyage à un flux de vapeur, créant ainsi le mélange de nettoyage.

2. Système de distribution (1) selon la revendication 1, dans lequel l'unité de nettoyage (3) comprend une unité de réception (33) configurée pour loger la tête de distribution (23) et pour recevoir les fluides sortant de la tête de distribution (23).

3. Système de distribution (1) selon la revendication 1 ou la revendication 2, dans lequel le deuxième mélangeur est un injecteur à venturi (312).

4. Système de distribution (1) selon la revendication 1, 2 ou 3, dans lequel l'unité de nettoyage (3) comprend, pour fournir le prémélange de nettoyage au deuxième mélangeur, un troisième mélangeur, en particulier une chambre de mélange (313), destiné à mélanger de l'air à un flux d'eau de nettoyage, créant ainsi le prémélange de nettoyage.

5. Système de distribution (1) selon la revendication 4, dans lequel l'unité de nettoyage (3) comprend, pour fournir l'eau de nettoyage au troisième mélangeur, un quatrième mélangeur, en particulier un mélangeur d'additifs (314), destiné à mélanger un agent de nettoyage à un flux d'eau, créant ainsi l'eau de nettoyage.

6. Système de distribution (1) selon l'une des revendications 4 à 5, comprenant un ou plusieurs des éléments suivants :
• une vanne de régulation (316) ou une pompe à eau (317) agencée pour fournir l'eau de nettoyage à la chambre de mélange (313) ;
• une pompe à eau (317) agencée pour fournir l'eau de nettoyage à la chambre de mélange (313), la pompe à eau étant une pompe volumétrique, telle qu'une pompe péristaltique ;
• une vanne commandée (318) ou une vanne statique agencée pour fournir de l'air, en particulier de l'air ambiant, à la chambre de mélange (313).

7. Le système de distribution (1) selon l'une des revendications précédentes, comprenant une conduite d'alimentation en vapeur pour fournir de la vapeur au deuxième mélangeur, et comprenant en outre une vanne d'arrêt de sécurité (319) disposée dans la conduite d'alimentation en vapeur, et/ou dans lequel un clapet anti-retour (315) est disposé dans le flux du prémélange de nettoyage vers le deuxième mélangeur ou l'injecteur à venturi (312), en particulier après le troisième mélangeur ou la chambre de mélange (313).

8. Procédé de mise en œuvre du système de distribution (1) selon l'une des revendications précédentes, comprenant l'acheminement du fluide de nettoyage vers la conduite ou le tuyau (22) et la tête de distribution (23) sous la forme d'un ou plusieurs des éléments suivants :
• de la vapeur ;
• un mélange de vapeur, d'air et d'eau.
